## Europäisches Patentamt
## European Patent Office
## Office européen des brevets

(19)

(11) Publication number: **0 034 867**
**A1**

(12) # EUROPEAN PATENT APPLICATION

(21) Application number: **81200194.9**

(22) Date of filing: **19.02.81**

(51) Int. Cl.³: **G 11 B 15/60**

(30) Priority: **22.02.80 NL 8001076**

(43) Date of publication of application:
**02.09.81 Bulletin 81/35**

(84) Designated Contracting States:
**AT BE CH DE FR GB IT LI LU NL SE**

(71) Applicant: **Van Dijk, Willem Frederik**
**Hoefijzer 60**
**NL-3632 WD Loenen a/d Vecht(NL)**

(72) Inventor: **Van Dijk, Willem Frederik**
**Hoefijzer 60**
**NL-3632 WD Loenen a/d Vecht(NL)**

(54) **An auxiliary mechanical device for magnetic tape registration and/or retrieval machines which use high winding speeds.**

(57) A mechanical device, comprising a round, low-mass, polished, stainless steel tube or rod (1), which exerts 1 to 15 grams of pressure at, or at about, the point (7) where the tape (5) makes contact with the tape-pack onto which it is wound. The pinning down of the tape onto the tape pack prevents air entrapment at this point (air on which the tape could float) and provides a uniform, even wind.

The amount of pressure depends on tape width, tape tension supplied by the machine winding the tape, and tape winding speed. The tube is connected to a tube holder (2) providing means to exert pressure and a mechanism to bring the tube into working position during winding. This mechanism can be made operational by means of a clutch (10,15), or an electromagnet (17) coupled to the tape transport command buttons of the machine.

FIG.2

EP 0 034 867 A1

An auxiliary mechanical device for magnetic tape registration
and/or retrieval machines which use high winding speeds.

The invention relates to a mechanical device which is auxiliary to
machines that use magnetic tape for storage and/or retrieval of
analog or digital signals which operate at high winding speeds.
The device comprises a low mass polished stainless steel tube (the
diameter of which is considerably smaller than the width of the
tape), which exerts pressure on the tape at, or at about the point
where it makes contact with the tape pack onto which it is wound.

Machines using magnetic tape for storage and/or retrieval of analog
or digital signals can be divided into two categories:
tape recorders and cassette recorders. The difference has to do with
the means by which tape guidance is provided: either by the
apparatus itself or found inside the cassette holding the tape.
Tape not housed inside a cassette can either be wound on a hub or
on a spool consisting of a hub which has spool flanges on both sides
to prevent the tape from jumping off the hub during fast winding.
Whatever the variety of electrical, magnetical, and mechanical
properties of commercially available tape, all tapes have in common
an emulsion carrier and one or more layers of magnetic emulsion, in
which information can be stored. Damage to the emulsion causes
degradation or loss of information.
Whatever the variety of machines using magnetic tape for storage of
analog or digital signals, all recorders have in common considerably
slower read/write speeds than winding speeds.

During winding of magnetic tape at high speeds a phenomenon can be
observed that is, in a sense, similar to "aquaplaning": the high
speed of winding causes an onrush of air which comes in between the
tape and the tape pack onto which it momentarily floats; the resulting air entrapment causes an uneven, loose wind with individual
turns of tape sticking out of the tape pack and thrown against the
spool flanges.
The phenomenon can be most clearly observed when a tape machine with one fixed high winding speed (as is common today, see Appendix) is combined with a tape that is selected for best electrical and magnetical properties. Optimal storage and retrieval results can only be obtained if an intimate tape-to(read/write)-head-contact is maintained. This requires the emulsion carrier to be very flexible, thus degrading its winding properties. Four detrimental effects can be noted which all degrade optimal data storage and/or retrieval:

1. Shedding of magnetic emulsion particles.
2. Deformation of the emulsion carrier.
3. Dust adherence on individual turns of tape sticking out of the tape pack which diminishes intimate tape-to-head contact.
4. Loose winding, which necessitates the use of spools instead of hubs as is common practice on professional recorders in Europe.

The authoritative magazine STUDIO SOUND noted these effects in its annual test reports on magnetic tape for professional and domestic use. (see Appendix).

Current production recorders rely on tape guides (rollers, pins, etc.) and tape tension for uniform winding of magnetic tape. However unless air entrapment between individual turns of tape is considerably reduced, no tape machine will be able to wind any magnetic tape really adequately.

The invention as claimed solves the problem of damage to magnetic tape caused by uneven and loose winding by remedying its main cause: air entrapment.

It provides the means to exert a little pressure at, or at about the point where the tape contacts the tape pack. Pressure is exerted by a round tube or rod which has a diameter considerably smaller than the width of the tape. The fact that the area of contact between tube and tape is theoretically infinitely small results in a very firm pinning down of the tape onto the tape pack, thus removing at this point air on which the tape could float.

The amount of pressure exerted is 1 to 15 grams, depending on tape width, tape tension supplied by the machine winding the tape, and tape winding speed. The tube being polished precludes damage to the tape through wear.

The advantages of the invention are mainly the following:

1. Uniform and even winding at high winding speeds of any type of magnetic tape on any kind of hub or spool without damage to the tape used.

2. The possibility to wind certain types of magnetic tape, which by virtue of their mechanical properties provide excellent tape-to-head contact, on hubs rather than on spools, as is common practice in Europe, a practice which incurs a high risk of tape spillage.

3. Pristine condition of magnetic tape after many winds.

One way of carrying out the invention is described below in detail, with reference to drawings 1 and 2, which illustrate only one specific embodiment, in which: Fig. 1 is a side view of a device in accordance with the invention; Fig. 2 is a top view of the same device; Fig. 3 shows a mechanism to hold or release the tube.

All sizes of mechanical parts of this embodiment of the invention stated are optimized for application of the invention on a tape machine using 6.35 mm. wide tape (commonly referred to as quarter inch tape).

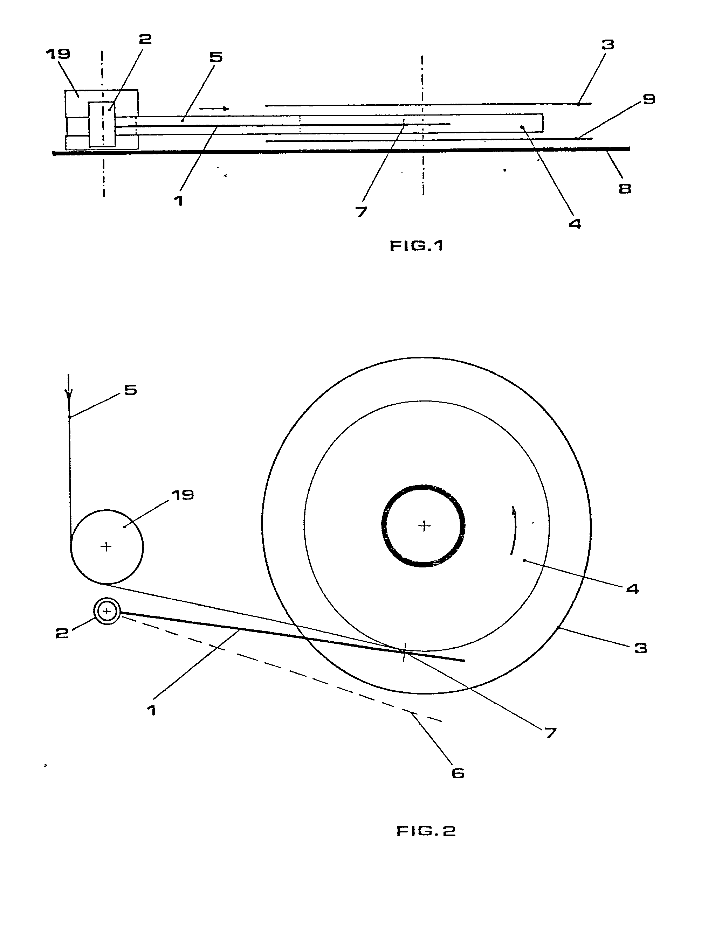

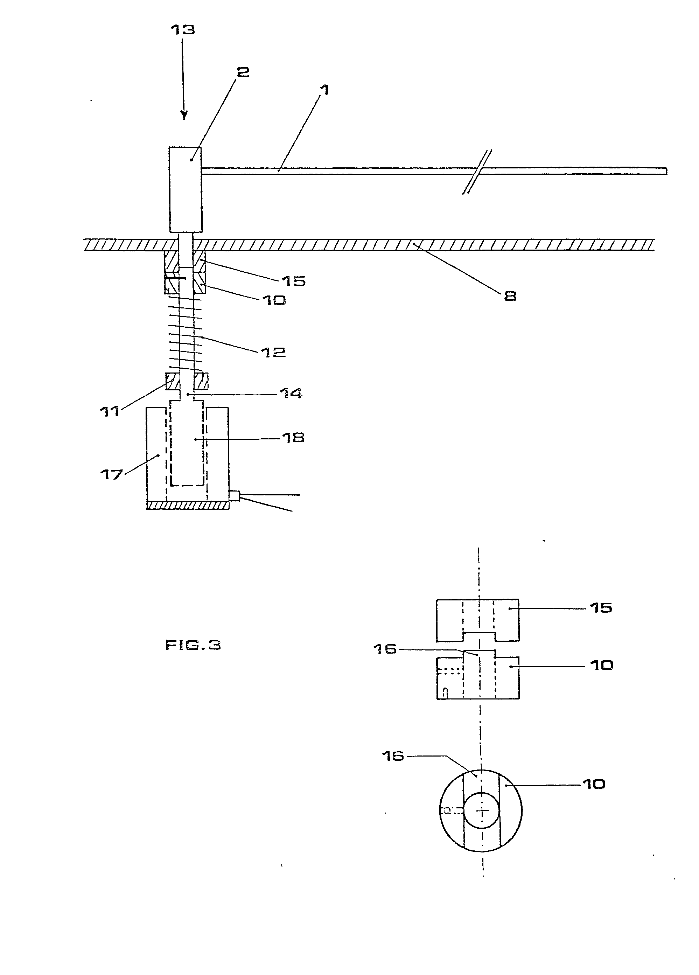

Figures 1, 2 and 3 show a mechanical device which is auxiliary to machines using magnetic tape for storage and/or retrieval of analog or digital signals comprising essentially an approximately 200 millimeters long, stainless steel, polished tube 1 with an outside/inside diameter or respectively 1.5/1.0 mm.
The tube is fastened to tube-holder 2 mounted on axle 14 which rotates in bearings 15,11, which allow it limited up and down motion. Spring 12 creates rotary tension between fixed bearing 11 and a clutch consisting of moving part 10 and fixed part 15 connected to axle 14. By depressing 13 tube holder 2 the moving part 10 of the clutch is moved out of space 16 within moving part 10 of the clutch.

Rotary spring tension created by spring 12 moves tube 1 from standby position 6 into working position, so that it can exert pressure at point 7, in the middle of magnetic tape 5 wound on a hub with flanges 3 and 9 fixed to it, where tape 5 contacts tape pack 4 during winding. The pressure exerted by tube 1 on tape pack 4 is 4 to 7 grams. Fastened to the end of axle 14, under the face plate 8 of the recorder, is magnetic core 18, which is attracted by electromagnet 17 if an electrical current passes through it, switched by one of the transport command buttons of the recorder.

Claims:

1. A mechanical device, which is auxiliary to machines that use magnetic tape for storage and/or retrieval of analog or digital signals, which operate at high winding speeds; characterised in that a round, low mass, polished, stainless steel tube, the diameter of which is considerably smaller than the width of the tape, exerts a pressure of 1 to 15 grams in the middle of the tape at, or about at, the point where the tape makes contact with the tape pack onto which it is wound. The tube is connected to a tube holder providing means to exert pressure.

2. A mechanical device as claimed in claim 1 characterised in that a tube is replaced by a low mass polished rod in case the requirement of smallness of a diameter in comparison to the width of the tape would render the application of tube impractical or unfeasible.

3. A mechanical device as claimed in claim 1 characterised in that the pressure exerting element, being a tube or rod, is connected to a part of the machine to which it is auxiliary, providing the required means to exert pressure.

4. A mechanical device as claimed in claim 1 characterised in that the pressure exerting element, being a tube or rod, is connected to a part of the housing of the tape, providing the required means to exert pressure.

5. A mechanical device as claimed in claim 1 characterised in that rotational tension created by a spring is transferred upon the tube.

6. A mechanical device as claimed in claim 1 characterised in that an electromagnet activated by one of the tape transport command buttons of the machine to which it is auxiliary, releases the tube into the working position.

APPENDIX.

All samples were subsequently inspected for winding properties at low fixed speed and tension (300 cm/s and 80 g) on an Ampex ATR-100 recorder, which is renowned for good tape handling.
High-speed winding was then assessed again on the Ampex or on a Teac 3340. Vast differences in winding performance were noted, with back-coated tapes generally performing better than shiny-backed tapes.
Unfortunately, the design of many modern recorders is such that they can only fast wind at a very high and fixed speed, with the inevitable result that many tapes end up with "leafy" winds (i.e. individual turns stand proud) that are prone to accidental damage. It appears that many tape machine manufacturers have forgotten that the tape spool is intended as a protective device and not as a tape guide; indeed many machines are completely incapable of winding tape on to European-type open hubs, as also are some tapes on any machine.

<div align="right">Studio Sound, August 1977.</div>

The physical performance of all tapes was considered to be very important because poor winding readily leads to inadvertent damage in handling, and also shedding of debris not only causes dropouts, but any accumulation of debris on tape guides can also damage the tape. Therefore all tapes were wound from end to end on two types of recorder, one typical of high quality professional machines and the other typical of the cheaper semi-professional machine as used by small studios.
An Ampex type ATR-100 was used to wind the tapes at constant tension of 70 g at a tape speed of 120 in/s and subsequently at its very fast winding speed averaging over 480 in/s and the condition of the tape noted after this treatment. The tape was then wound from end to end in the fast wind mode again but on a Teac A-3340 which winds at a low tension typical of semi-professional machines. The tape's condition was again noted. Very large differences were found between tape types with the back coated tapes generally exhibiting a better winding performance than those without a back coat; however more shedding or debris was found with back coated tapes.

<div align="right">Studio Sound, April 1979.</div>

FIG.1

FIG.2

FIG.3

# EUROPEAN SEARCH REPORT

| Category | DOCUMENTS CONSIDERED TO BE RELEVANT | | CLASSIFICATION OF THE APPLICATION (Int Cl ³) |
|---|---|---|---|
| | Citation of document with indication, where appropriate, of relevant passages | Relevant to claim | |
| X | GB - A - 773 509 (E.M.I.) <br> * Page 4, lines 59-74; page 1, line 18 - page 3, line 100; figures * <br> -- | 1-3,5 | G 11 B 15/60 |
| | US - A - 3 749 328 (J.F. DUSEN-BERY) <br> * Column 2, line 44 - column 3, line 28; figures* <br> -- | 1,3 | |
| | US - A - 3 869 710 (S. HARAZONO) <br> * Column 4, line 5 - column 6, line 2; figures 1,5 * <br> -- | 1,3,6 | TECHNICAL FIELDS SEARCHED (Int Cl.³) <br><br> G 11 B 15/60 <br> 15/66 <br> 23/02 |
| | DE - C - 974 466 (J. GUNDEL) <br> * Page 1, - page 3, line 5; figures * <br> -- | 1,3,5 | |
| | US - A - 3 698 655 (D.T.L. CHANG) <br> * Column 3, line 16 - column 5, line 55; figures * <br> -- | 1,3 | |
| A | US - A - 3 627 229 (E.O. WANGERLN) | 1,5 | CATEGORY OF CITED DOCUMENTS |
| A | DE - B - 1 044 437 (SIEMENS) | 1 | X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| A | US - A - 3 190 574 (A.Z. PURZYCKI) | 1 | |
| A | BE - A - 653 065 (VECTRON) <br> & NL - A - 64 10665 <br><br> ---- | 1,5 | |

| | | &: member of the same patent family, corresponding document |
|---|---|---|
| The present search report has been drawn up for all claims | | |
| Place of search <br> The Hague | Date of completion of the search <br> 25-05-1981 | Examiner <br> DECLAT |

EPO Form 1503.1    06.78